Europäisches Patentamt

European Patent Office

Office européen des brevets

(11) Veröffentlichungsnummer: **0 319 822**
**A1**

(12) **EUROPÄISCHE PATENTANMELDUNG**

(21) Anmeldenummer: **88119842.8**

(22) Anmeldetag: **29.11.88**

(51) Int. Cl.⁴: **F16J 15/32**

(30) Priorität: **04.12.87 DE 3741084**

(43) Veröffentlichungstag der Anmeldung:
**14.06.89 Patentblatt 89/24**

(84) Benannte Vertragsstaaten:
**DE FR GB IT SE**

(71) Anmelder: **FORD-WERKE
AKTIENGESELLSCHAFT
Werk Köln-Niehl Henry-Ford-Strasse
Postfach 60 40 02
D-5000 Köln 60(DE)**

(84) **DE IT SE**

Anmelder: **FORD MOTOR COMPANY LIMITED
Eagle Way
Brentwood Essex CM13 3BW(GB)**

(84) **GB**

Anmelder: **FORD FRANCE SOCIETE ANONYME
344 Avenue Napoléon Bonaparte B.P. 307
F-92506 Rueil Malmaison Cedex(FR)**

(84) **FR**

(72) Erfinder: **Gralka, Bernhard
Rosenweg 6
D-5064 Rösrath(DE)**

(74) Vertreter: **Ritzkowsky, Harald, Dipl.-Ing.
Ford-Werke Aktiengesellschaft
Patentabteilung NH/DRP Henry-Ford-Strasse
D-5000 Köln 60(DE)**

(54) **Radialwellendichtring mit Staubschutzlippe.**

(57) Der Raum zwischen den beiden Dichtlippen (7 und 8) und der Welle (4) ist über eine oder mehrere in der Staubschutzlippe (8) angeordnete druckabhängige Membranöffnungen (Schnitt 10) mit der Aussenatmosphäre verbindbar.

FIG.1

## Radialwellendichtring mit Staubschutzlippe

Die Erfindung bezieht sich auf einen Radialwellendichtring mit Staubschutzlippe, der im Oberbegriff des Patentanspruches erläuterten Art.

Aus der DE-PS 32 36 636 ist ein Radialwellendichtring mit Staubschutzlippe der im Oberbegriff des Patentanspruches erläuterten Art bekannt.

Bei diesem bekannten Radialwellendichtring ist der Raum zwischen den beiden Dichtlippen und der Welle über eine druckabhängige Membranöffnung mit dem Innenraum des Gehäuses verbindbar, sobald im Innenraum des Gehäuses ein Überdruck entsteht. Die druckabhängige Membranöffnung öffnet hierbei nach außen in den Raum zwischen der inneren Dichtlippe und der äußeren Staubschutzlippe und dadurch kann Ölnebel oder aber auch Öl in den Raum zwischen den beiden Dichtlippen und auf die Welle gelangen.

Dieser bekannte Radialwellendichtring mit einer druckabhängigen Membranöffnung weist den Nachteil auf, daß er nur oberhalb des normalen Schmierölspiegels eines Gehäuses eingebaut werden kann, da er ansonsten eine Quelle einer ständigen Leckage darstellen würde.

Auch wenn er oberhalb des Schmierölspiegels eingebaut wird, gelangt durch den Ölnebel in einem Getriebegehäuse Schmieröl in den Raum zwischen den beiden Dichtlippen und dieser führt früher oder später zu einer Benetzung der äußeren Staubschutzlippe, die naturgemäß von außen der Beaufschlagung mit Staub ausgesetzt ist. Die Erfahrung hat jedoch gezeigt, daß eine mit Schmieröl benetzte Staubschutzlippe alsbald zu einer Verschlechterung ihrer Funktion führt, da das Schmieröl den auftreffenden Staub festhält und dieser an der Welle seine Schmirgelfunktion entfalten kann. Eine trockenlaufende Staubschutzlippe wird hingegen den auftreffenden Staub immer wieder abweisen.

Beobachtungen der Funktion eines Radialwellendichtringes mit Staubschutzlippe haben gezeigt, daß durch die Winkelverhältnisse an der inneren vom Federring beaufschlagten Radialdichtlippe eine Saugwirkung entsteht, die insbesondere bei höheren Drehzahlen von über 3 m/Sek. zu einer derart starken Unterdruckbildung im Raum zwischen den beiden Dichtlippen führt, wodurch der Nachteil auftrat, daß, wurde eine Staubschutzlippe mit Überdeckung zur Welle angewendet, diese unter Druckbildung die Staubschutzlippe gegen die sich drehende Welle gesaugt hat, wodurch es zu einem Einlaufen der Dichtlippe in die Welle bzw. zu einem erhöhten Verschleiß der Dichtlippe kam, wodurch die angestrebte Funktion der Staubschutzlippe frühzeitig verloren ging.

Aus den oben erwähnten Beobachtungen hat man daher gegenwärtig bei allen Anordnungen von Radialwellendichtringen auf eine Überdeckung der Staubschutzlippe mit der Welle verzichtet, wenn mit der oben erwähnten hohen Wellenumfangsgeschwindigkeit im normalen Fahrbetrieb gerechnet werden mußte. Bei Abtriebswellen von Kraftfahrzeuggetrieben wird durch den Verzicht auf die Überdeckung der Staubschutzlippe mit der Welle jedoch auf eine wesentliche Schutzwirkung der Staubschutzlippe verzichtet.

Dementsprechend mußte man die Anordnung des Radialwellendichtringes durch zusätzlich vorgeschaltete Schleuder ringe, Labyrinthdichtungen oder dergleichen vor dem Zutritt von Schmutz und Staub abschirmen.

Die Aufgabe der Erfindung ist es, einen Radialwellendichtring mit Staubschutzlippe in Überdeckung zur Welle, der im Oberbegriff des Patentanspruches erläuterten Art derart zu gestalten, daß der unerwünschte Unterdruckaufbau auf einfache Weise vermieden wird.

Gemäß der Erfindung wird diese Aufgabe gelöst, indem ein Radialwellendichtring mit Staubschutzlippe gemäß dem Oberbegriff des Patentanspruches die im Kennzeichenteil des Patentanspruches aufgezeigten Merkmale aufweist.

Dadurch, daß der Raum zwischen den beiden Dichtlippen über eine oder mehrere in der Staubschutzlippe angeordnete, lappen- oder zungenförmige druckabhängige Membranöffnungen mit der Außenatmosphäre verbindbar ist, wird ein Ausgleich des schädlichen Unterdruckes ermöglicht, wobei die durch Schnitte gebildeten lappen- oder zungenförmigen Membranöffnungen durch ihre Öffnungsbewegung nach innen hin etwaigen an der Außenoberfläche der Staubschutzlippe angehafteten Schmutz abstreifen und daher am Eintritt in den Raum zwischen den beiden Dichtlippen hindern. Da zum Abbau des auftretenden Unterdruckes nur ganz geringe Schlitzöffnungen erforderlich sind, kann der Druck im Raum zwischen den beiden Dichtlippen auf den Druck der Außenatmosphäre gehalten werden und ein Ansaugen der Staubschutzlippe an die Welle wird sicher vermieden.

Die Erfindung wird anhand eines in der Zeichnung gezeigten Ausführungsbeispieles näher erläutert. Es zeigt:

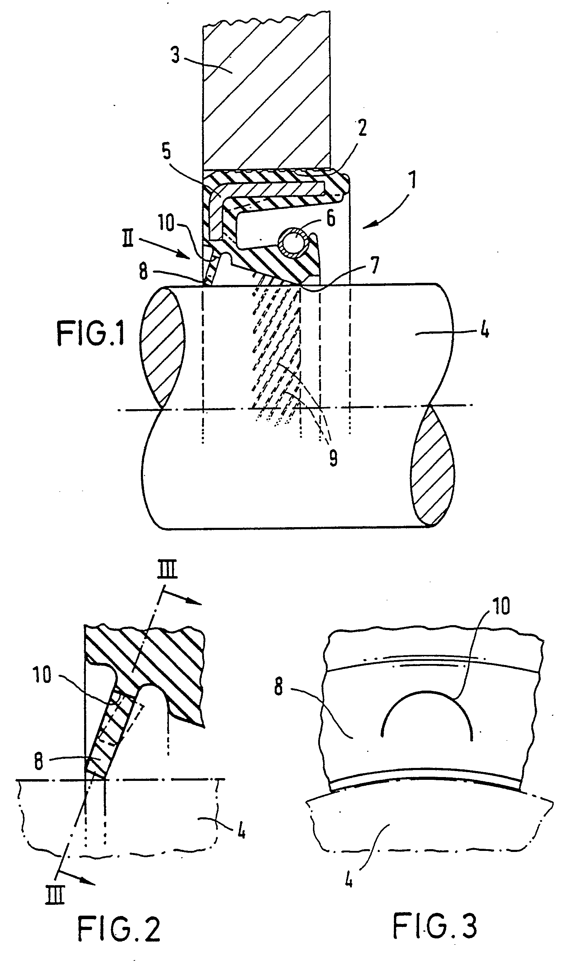

Fig. 1 Einen vertikalen Teilschnitt durch einen Radialwellendichtring mit Staubschutzlippe gemäß der Erfindung;

Fig. 2 Eine vergrößerte Ansicht des Bereiches der Staubschutzlippe mit der druckabhängigen Membranöffnung in Richtung des Pfeiles II in Fig. 1 gesehen und

Fig. 3 einen Schnitt entlang der Linie III-III in Fig. 2.

Ein im wesentlichen herkömmlicher Radialwellendichtring 1 ist in einer Bohrung 2 eines Gehäuseteiles 3 angeordnet um eine durch das Gehäuse 3 nach außen führende Welle 4 abzudichten. Der Radialwellendichtring 1 besteht aus einem verstärkten Befestigungsring 5, einer nach innen abgewinkelten von einem Federring 6 beaufschlagten Radialdichtlippe 7 und einer nach außen abgewinkelten Staubschutzlippe 8, die zur Welle 4 eine gewisse Überdekkung aufweist, die in gestrichelten Linien angedeutet ist.

Durch die Winkellage an der nach innen abgewinkelten Radialdichtlippe 7 sowie auch durch die bei höheren Umfangsgeschwindigkeiten üblicherweise an deren Außenseite vorgesehenen Drallstege 9 wird im Raum zwischen der Dichtlippe 7 und der Staubschutzlippe 8 und der Welle 4, insbesondere bei mit höherer Drehzahl laufender Welle ein Unterdruck erzeugt, der die Staubschutzlippe 8 oder die elastisch aufgehangene Dichtlippe 7 derart fest gegen die Welle 4 saugt, daß die Welle und/oder die Dichtlippe in erhöhtem Maße verschleißt und dadurch frühzeitig die gewünschte Dichtwirkung verloren geht.

Gemäß der Erfindung ist in der nach außen abgewinkelten Staubschutzlippe 8 eine oder mehrere druckabhängige Membranöffnungen vorgesehen, die lediglich aus einem vorzugsweise bogenförmigen Schnitt 10 bestehen, der lappenförmige oder zungenförmige bewegliche Wandungsteile der Staubschutzlippe 8 bildet.

Die Auslegung der Dicke der Staubschutzlippe 8 sowie der Verlauf und die Längenerstreckung der bogenförmigen Schnitte 10 muß so empierisch festgelegt werden, daß ein im Raum zwischen den beiden Dichtlippen 7 und 8 auftretender Unterdruck frühzeitig abgebaut wird, daß jedoch die lappenförmigen Wandungsteile der Staubschutzlippe 8 nicht durch die Beaufschlagung mit Schlamm oder Schmutz verformt und geöffnet werden.

Dadurch, daß die druckabhängige Membranöffnung nur durch einen Schnitt 10 gebildet wird, der nur bei Bedarf, d.h. bei auftretenden Unterdruck, einen minimalen Schlitzquerschnitt zum Ausgleich des Druckunterschiedes freigibt, wird sichergestellt, daß über diese druckabhängige Membranöffnung kein Schmutzeintritt in den Raum zwischen den beiden Dichtlippen erfolgen kann.

## Ansprüche

Radialwellendichtring mit Staubschutzlippe, mit einem äußeren durch eine Einlage verstärkten Befestigungsring zum Befestigen einer Gehäusebohrung und einer inneren nach innen abgewinkelten, von einem Federring beaufschlagten Radialdichtlippe und einer nach außen abgewinkelten Staubschutzlippe die eine durch die Gehäusebohrung nach außen führende Welle abdichten, wobei der Raum zwischen den beiden Dichtlippen und der Welle über eine druckabhängige Membranöffnung mit einem Raum höheren Druckes verbunden ist, dadurch gekennzeichnet, daß der Raum zwischen den beiden Dichtlippen (7 und 8) und der Welle (4) über eine oder mehrere in der Staubschutzlippe (8) angeordnete druckabhängige Membranöffnungen in Form von bogenförmigen Schnitten (10) mit der Außenatmosphäre verbindbar ist.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-2 830 832 (MOORMAN)<br>* Spalte 3, Zeilen 25-44; Figuren 4-6 *<br>--- | 1 | F 16 J 15/32 |
| Y | US-A-4 531 747 (MIURA)<br>* Spalte 1, Zeile 43 - Spalte 2, Zeile 18; Figur 2 *<br>--- | 1 | |
| A | DE-A-3 608 954 (GOETZE)<br>* Insgesamt *<br>----- | 1 | |

**RECHERCHIERTE SACHGEBIETE (Int. Cl.4)**

F 16 J

Der vorliegende Recherchenbericht wurde für alle Patentansprüche erstellt

| Recherchenort | Abschlußdatum der Recherche | Prüfer |
|---|---|---|
| DEN HAAG | 10-03-1989 | LEGER M.G.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes Dokument